# EUROPÄISCHE PATENTSCHRIFT

(11) **EP 1 536 998 B1**
(45) Veröffentlichungstag und Bekanntmachung des Hinweises auf die Patenterteilung: **26.07.2006**
(21) Anmeldenummer: 03794806.4
(22) Anmeldetag: 03.09.2003
(51) Int. Cl.: B60T 17/22, B60W 50/02, F02D 45/00, G05D 13/00, F16H 61/00, H04L 1/00, B60K 28/00, B60Q 1/44

(54) **VERFAHREN UND VORRICHTUNG ZUM ÜBERPRÜFEN VON BREMSSIGNALEN BEI EINEM FAHRZEUG**
METHOD AND DEVICE FOR MONITORING BRAKE SIGNALS IN A VEHICLE
PROCEDE ET DISPOSITIF POUR CONTROLER DES SIGNAUX DE FREINAGE SUR UN VEHICULE

(30) Priorität: 04.09.2002 DE 10240841
(43) Veröffentlichungstag der Anmeldung: 08.06.2005
(73) Patentinhaber: LuK Lamellen und Kupplungsbau Beteiligungs KG, 77815 Bühl (DE)
(72) Erfinder: EGGERT, Thomas, 76131 Karlsruhe (DE); MOOSHEIMER, Johannes, 77815 Bühl (DE); HENNEBERGER, Klaus, 77815 Bühl (DE); KÜPPER, Klaus, 77815 Bühl (DE)
(86) Internationale Anmeldenummer: PCT/DE2003/002912
(87) Internationale Veröffentlichungsnummer: WO 2004/024524

(56) Entgegenhaltungen:
- EP-A- 0 937 916
- DE-A- 3 928 537
- DE-A- 10 065 012
- DE-A- 19 805 089
- GB-A- 2 317 660
- US-A- 4 845 463

## Beschreibung

Die vorliegende Erfindung bezieht sich auf ein Verfahren und eine Vorrichtung zum Überprüfen von Bremssignalen bei einem Fahrzeug mit einer Getriebesteuereinheit und einer Motorsteuereinhelt.

Insbesondere bei Fahrzeugen mit einem automatisierten Getriebe sind eine Vielzahl von Signalen und Informationen zum Ansteuern des Getriebes und des Motors erforderlich. Beispielsweise werden auch Bremssignale zum Ansteuern des Fahrzeuges verwendet.

In der EP 0 937 916 A2 wird ein Bremssignalfehlererkennungssystem sowie ein Verfahren zur automatischen Getriebesteuerung offenbart. Das Fehlererkennungssystem umfasst einen Fahrzeuggeschwindigkeitssensor sowie einen Bremsschalter zur Bestimmung, ob ein Bremssystem betätigt ist oder nicht und zur Erzeugung eines Bremssignals, dass dies anzeigt. Es wird auf einen Fehler geschlossen, wenn die Verzögerung des Fahrzeugs einen vorgegebenen Wert übersteigt und das Bremssignal nicht detektiert wird und dies Phänomen kontinuierlich auftritt und die Anzahl seines Auftretens eine vorgegebene Anzahl übersteigt.

In der DE 198 05 089 A1 wird ein Bremssteuersystem für Kraftfahrzeuge offenbart. Die elektrischen Fluiddrucksteuerventile und mehrere elektrische Schaltventile sind parallel zu einer Stromversorgungsquelle geschaltet. Mehrere Störungssensoren sind den jeweiligen elektrischen Fluiddrucksteuerventilen zugeordnet, um festzustellen, ob eine elektrische Systemstörung in einem der elektrischen Fluiddrucksteuerventile auftritt. In einem solchen Fall wird ein entsprechendes unter den elektrischen Schaltventilen dazu veranlasst, selektiv einen entsprechenden Radzylinder mit einem Hauptzylinder zu verbinden.

Der vorliegenden Erfindung liegt demnach die Aufgabe zugrunde, ein Verfahren und eine Vorrichtung zum Überprüfen von Bremssignalen der eingangs genannten Gattung vorzuschlagen, um insbesondere die Verfügbarkeit eines Fahrzeuges weiter zu erhöhen.

Diese Aufgabe kann durch ein erfindungsgemäßes Verfahren zum Überprüfen von Bremssignalen bei einem Fahrzeug mit einer Getriebesteuereinheit und einer Motorsteuereinhelt gelöst werden, bei dem eine Fehlererkennung und/oder eine Plausibilisierung der unterschiedlichen Bremssignale durchgeführt wird.

Bei dem erfindungsgemäßen Verfahren können vorzugsweise bei der Überprüfung als Bremssignale ein Fußbremslichtschaltersignal und ein Bremslichtschaltersignal von einem Fahrzeugnetzwerk und ein Bremslichtschaltersignal von der Motorsteuereinheit von der Getriebesteuereinheit empfangen werden. Es ist auch denkbar, dass andere geeignete Signale verwendet werden, um eine Auswertung der Bremssignale und eine Ermittlung von Ersatzwerten und/oder Ersatzstrategien zu realisieren bzw. weiter zu verbessern.

Auf diese Weise stehen zur Erkennung einer Bremsbetätigung bevorzugt drei verschiedene Bremssignale aus unterschiedlichen Quellen zur Verfügung. Ein Signal stammt von dem Fußbremsschalter und die anderen zwei Signale geben den jeweiligen Zustand des Bremslichtschalters wieder. Ziel ist es, diese drei Signale gegeneinander zu validieren und zumindest zwei von der Strategie zu verwertende logische Verknüpfungssignale zu generieren und zu verwenden. Eine korrekte Erkennung des Bremssignals ist entscheidend für das Verhalten der Getriebesteuereinheit (TCU). Die Getriebesteuereinheit kann wie oben bereits beschrieben drei Bremssignale empfangen, wobei ein Bremslichtschaltersignal und ein Bremsschaltersignal über den CAN-Bus von der Motorsteuereinheit (PCM) gesendet wird, sodass das Bremslichtsignal redundant überprüft werden kann.

Vorzugsweise kann als Verknüpfungssignal eine logische UND-Verknüpfung (Fußbremse-UND) und eine logische ODER-Verknüpfung (Fußbremse-Oder) von einem Fußbremsschalter und einem Bremslicht verwendet werden. Wenn eine schnelle Reaktion auf das Bremssignal durchgeführt werden soll, welche weniger kritisch bei der Bremse ist, kann bevorzugt das FußbremsOder-Signal (FootBrakeOR) verwendet werden. Bei Funktionen, bei denen sichergestellt sein muss, dass die Bremse betätigt ist, kann bevorzugt das FußbremsUND-Signal (FootBrakeAND) verwendet werden.

Gemäß einer Weiterbildung der Erfindung können die Bremssignale zur Fehlererkennung während und/oder nach einem vorbestimmten Fahrzyklus beobachtet bzw. ausgewertet werden.

Im Rahmen einer vorteilhaften Ausgestaltung der Erfindung kann vorgesehen sein, dass sich die Länge eines Fahrzyklus dadurch bestimmt, dass beobachtet wird, ob ein Gang eingelegt ist, welcher größer als der zweite Gang ist, und/oder die Fahrzeuggeschwindigkeit größer als 16 km/h ist und/oder die Zündung zumindest für 2 Minuten angeschaltet ist. Es sind jedoch auch andere Definitionen denkbar.

Gemäß einer Weiterbildung kann vorzugsweise nach einem beendeten Fahrzyklus bei jedem Bremssignal überprüft werden, ob es den Zustand "1" und Zustand "0" durchlaufen hat. Unabhängig davon, ob der Kontakt normalerweise geöffnet oder geschlossen ist, bedeutet der Wert 1, dass die Bremse betätigt ist und der Wert 0, dass die Bremse nicht betätigt ist.

Bei der Überprüfung der Bremssignale können beispielsweise mehrere Bremszustandszähler verwendet werden. Möglicherweise kann die Fehleranzahl bei jedem Bremszustandszähler erhöht werden, wenn während eines Fahrzyklus das Bremssignal nicht beide Bremszustände erreicht. Während eines Fahrzyklus ist eine Signalkorrelation zwischen den Werten des Bremslichtes und der Fußbremse nicht möglich, da infolge des Aufbaus der beiden Bremsschalter die Zwischenzustände (StopLight=1 & FootBrake=0) und (StopLight=0 & FootBrake=1) plausibel sind.

Wenn die Zündung ausgestellt und der Fahrzyklus komplett durchgeführt worden ist, kann für jedes Bremssignal kontrolliert werden, ob es beide Zustände "1" (Bremse betätigt) und "0" (Bremse nicht betätigt) durchlaufen hat. Um dies zurealisieren können bevorzugt drei Bremszustandszähler verwendet werden. Die Fehleranzahl bei einem Bremszustandszähler steigt bei jedem Fahrzyklus an, bei dem das Bremssignal nicht beide Bremszustände erreicht hat. Wenn der Bremszustandszähler den Wert n annimmt, kann ein Diagnose-Fehler-Code (DTC) oder dergleichen gesetzt werden. Die Bits für den Bremszustand sind auf "1" gesetzt, wenn der jeweilige Bremszustand während des Fahrzyklus erreicht wird.

Es ist zu beachten, dass, wenn ein Bremssignal nicht beide Bremszustände erreicht hat, es nicht zu 100% wahrscheinlich ist, dass ein Fehler vorliegt, da der plausible Zustand (StopLight ≠ FootBrake) während des gesamten Fahrzyklus gehalten wird. Demnach sollte der Fahrzyklus komplett beendet sein, bevor eine Auswertung vorgenommen wird.

Es ist denkbar, dass insbesondere das Signal StopLightHw auch nach dem Abschalten der Zündung weiter beobachtet wird. Darüber hinaus ist es möglich, eine Fehlererkennung bei Wackelkontakten durchzuführen. Beispielsweise können die Zustandszähler durch einen Zustandsveränderungszähler erweitert werden, welcher in der Lage ist, Wackelkontakte zu erkennen. Dieser Zustandsveränderungszähler kann durch jede Zustandsänderung bei jedem Bremssignal "0" → "1" or "1" → "0" erhöht werden.

Nach dem die Zündung ausgeschaltet ist, kann der Zustandsveränderungszähler höhere Werten als die anderen Zähler annehmen, welches an einem Wackelkontakt liegt, wobei der Fehlerzähler auch ansteigt.

Da es plausibel ist, dass der Zustand (StopLight ≠ FootBrake) oft erreicht wird, ist es möglich, dass einer der beiden Bremslichschalter mehrmals in der Position "1" (betätigt) ist. Dies macht die Erkennung eines Wackelkontaktes schwierig und sie sollte sehr vorsichtig durchgeführt werden, d. h., erst bei einem sehr großen Unterschied zwischen den Zählern sollte ein Anstieg des Fehlerzählers erlaubt werden.

Nachfolgend werden Reaktionen auf die verschiedenen Fehler beschrieben. Dabei können bevorzugt vier verschiedene Fehlertypen berücksichtigt werden:
A erkannter Fehler während des Fahrzyklus:
AC erkannter CAN-Fehler während des Fahrzyklus:
B erkannter Fehler nach dem Fahrzyklus:
C erkannter Fehler nach dem Fahrzyklus:
Es können jedoch auch andere Fehlertypen verwendet werden.

Ferner werden Reaktionen auf erkannte Fehler beschrieben. Wenn die Fehler A und AC erkannt werden, kann sofort ein Diagnose-Fehler-Code (DTC) gesetzt werden. Die Diagnose-Fehler-Codes für die Fehler B und C werden bevorzugt nach der Auswertung der Bremszustandszähler, nachdem die Zündung ausgeschaltet ist, gesetzt, wenn der Fehlerzähler den Wert n annimmt.

Darüber hinaus wird das Messen bzw. das Ermitteln der Fehler beschrieben. Beispielsweise können in Abhängigkeit von der jeweiligen Fehlerart verschiedene Ersatzmessungen durchgeführt werden. Somit kann eine Fehlererkennung eines Signalausfalls bzw. eine Signal-Plausibilisierung und eine Bildung von Ersatzwerten realisiert werden, welche die Verfügbarkeit des Fahrzeuges sicherstellen. Außerdem werden weitere Strategien zur Rücknahme der Ersatzwerte und -maßnahmen vorgeschlagen.

Ferner werden Risiken beschrieben, welche infolge von nicht erkannten Fehlern auftreten, wenn z. B. das kombinierte Bremslichtsignal oder Fußbremssignal fehlerhaft ist. Der Signalkorrelationsprozeß erkennt Fehler bevorzugt nach dem ersten Fahrzyklus mit einem permanent vorliegenden Fehler. Infolgedessen kann ein Fahrzyklus mit einem nicht erkannten Fehler als erster Fahrzyklus durchgeführt werden.

Insgesamt wird das Einlegen des R-Ganges ohne Drücken der Bremse als ein hohes Risiko betrachtet. Das gleich hohe Risiko existiert immer bei dem Wechsel vom Neutralzustand (N) zum Fahrmodus (D). Deshalb wird vorgeschlagen, dass ein N-D-Moduswechsel nur erlaubt wird, wenn die Bremse gedrückt bzw. betätigt wird.

Ferner werden Ersatzstrategien insbesondere für das Signal FußbremsUND (FootBrakeAND) vorgeschlagen. Dieses Signal kann bevorzugt immer den Wert "0" annehmen. Zunächst wird die Freigabe der Parksperre bei einem fehlerhaften Fall betrachtet. Wenn das FootbrakeAND Signal immer 0 ist, wird die Parksperre niemals freigegeben. Um diese zu lösen, ohne dass die Fahrzeugsicherheit reduziert wird, sind verschiedene Signalkombinationen für eine Fahrererkennung vorstellbar.

Im weiteren wird das Einlegen eines Vorwärtsganges oder des Rückwärtsganges bei einem fehlerhaften Fall betrachtet. Wenn der Wechsel von Neutral (N) zum Fahrmodus (D) oder zum Rückwärtsgang (R) in Abhängigkeit von dem Softwaresignal FootBrakeUND erfolgt, wird eine ähnliche Notlaufstrategie zum Einlegen der Gänge erforderlich.

Die vorgeschlagene Strategie kann auch durch das FootBrakeUND Signal erweitert werden.

Ferner wird die Rücknahme der Fehler betrachtet. Bei direkt erkannten Fehlern werden die Diagnosefehlercodes der Fehlerart A und AC zurückgenommen, wenn die Signale wieder korrekt empfangen werden.

Bei indirekt erkannten Fehlern kann vorgesehen werden, dass, wenn der Fehlerzähler des Bremszustandszählers bei einem der Bremssignale nicht gleich 0 ist, dieses Bremssignal nicht bei Beginn des nächsten Fahrzyklus berücksichtigt wird. Jedoch sind auch andere Reaktionen bei der Fehlererkennung denkbar.

Das Rücksetzen des Zählers auf den Wert 0 kann für die Fehlerarten B und C unterschiedlich sein. Wenn der Zähler den Wert 0 annimmt, kann das Signal validiert und für die Bremszustandsbewertung wieder berücksichtigt werden.

Der Fehlerzähler wird auf den Wert 0 zurückgesetzt, wenn bei Fehlerart B während des Fahrzyklus beide Zustände bei der Bremse ("1" und "0") durchlaufen worden und das unzulässige Signal sowie das FootBrakeODER Signal der Wert "1" annehmen.

Bei dem Fehlertyp C kann der Fehlerzähler, nachdem die Zündung ausgeschaltet ist, auf den Wert 0 zurückgesetzt werden, wenn während des Fahrzyklus beide Zustände bei der Bremse ("1" und "0") durchlaufen worden.

Sobald der Fehlerzähler auf den Wert 0 zurückgesetzt ist und das Bremssignal wieder zulässig ist, kann der Diagnosefehlercode zurückgenommen werden, wenn keiner der Fehlerzähler den Wert n annimmt.

Die vorgeschlagene Strategie zum Auswertung und zur Korrelation von mehreren Bremssignalen kann auch noch geeignet modifiziert werden. Besonders vorteilhaft ist es bei der erfindungsgemäßen Strategie im Vergleich zu bekannten Vorgehensweisen, dass die Möglichkeiten der Fehlererkennung, wie z. B. bei einem Kabelbruch, einem Kurzschluss mit der Masse oder mit der Batterie oder dergleichen, wesentlich durch den Erkennungszustand nach einem Fahrzyklus verbessert wird. Ferner wird durch die Bildung von Ersatzwerten die Fahrzeugsicherheit insbesondere bei wesentlichen Fehlern verbessert. Somit wird das Fahrzeug z. B. durch ein nicht sicherheitskritisches fehlerhaftes Bremssignal nicht länger in seinen Funktionen begrenzt. Auf diese Weise wird die Verfügbarkeit des Fahrzeuges erhöht, ohne dass dabei die Fahrzeugsicherheit reduziert wird.

Im Rahmen des erfindungsgemäßen Verfahrens können einige Bremszustände des Fahrzeuges während der Fahrt als fehlerhaft erkannt werden, wie z.B. bei einem Kabelbruch oder dergleichen. Andere Bremszustände können erst nach Beendigung eines Fahrzyklus erkannt werden. Um dies zu ermöglichen wird ein Fahrzyklus verwendet, bei dem sicher gestellt wird, dass die Bremse betätigt und auch wieder frei gegeben worden ist. Nach Beendigung des Fahrzyklus kann überprüft werden, ob alle verfügbaren Bremssignale die Zustände "Bromse getreten" und "Bremse nicht getreten" während des Fahrzyklus durchlaufen haben. Wenn dies für ein Signal nicht der Fall ist, kann bevorzugt während des nächsten Fahrzyklus dieses Signal für die Signalauswertung nicht mehr verwendet werden. Dies kann solange erfolgen, bis dieses Signal wieder als plausibel erkannt worden ist.

Wenn sämtliche Bremssignale nach der Beendigung des Fahrzyklus nur einen Zustand eingenommen haben, können bevorzugt sofort die Ersatzwerte für die Ausgangssignale entsprechend gesetzt werden. Die durch diesen Fehler hervorgerufenen Fehlerreaktionen können nur nach Beendigung eines korrekten Fahrzyklus zurück genommen werden.

Die der Erfindung zugrunde liegende Aufgabe kann auch durch eine Vorrichtung zum Überprüfen von Bremssignalen bei einem Fahrzeug mit einer Getriebesteuereinheit und einer Motorsteuereinheit, insbesondere zum Durchführen des vorgeschlagenen Verfahrens, gelöst werden, bei der durch die Getriebesteuereinheit eine Fehlererkennung und/oder eine Plausibilisierung der unterschiedlichen Bremssignale vorgesehen ist.

Weitere Vorteile und vorteilhafte Ausgestaltungen ergeben sich aus den Unteransprüchen und den nachfolgend beschriebenen Zeichnungen und Tabellen
Es zeigen:

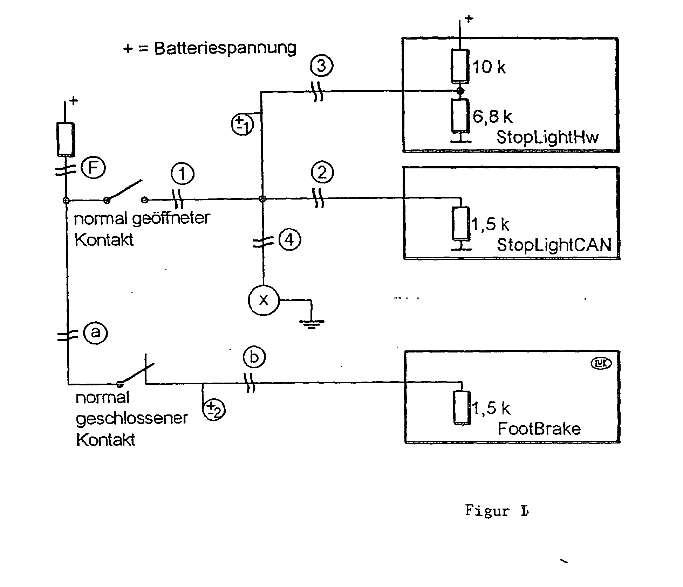

- Figur 1: ein Schaltbild zur Auswertung der Bremssignale;

In Tabelle 1 ist eine Übersicht der Signal-Kombinationen und der Signalerzeugungen des erfindungsgemäßen Verfahrens dargestellt, wobei in verschiedenen Spalten das Bremlichtschaltersignal der Motorsteuereinheit und des Fahrzeugnetzwerkes CAN sowie das Bremslicht und die Fußbremse aufgenommen sind. Ferner sind die beiden logischen Verknüpfungssignale FußbremsODER und FußbremsUND gezeigt. Dabei ist zu beachten, dass "0" bedeutet, dass die Bremse nicht betätigt wird und dass "1" bedeutet, dass die Bremse betätigt wird.

Die von der Getriebesteuereinheit empfangenen Signale sind in Tabelle 2 dargestellt.

In Tabelle 3 und 4 sind Situationen angegeben, in denen jeweils die UND-Verknüpfung und die ODER-Verknüpfung verwendet werden, wobei in Tabelle 3 die logische ODER-Verknüpfung und in Tabelle 4 die logische UND-Verknüpfung angegeben sind.

Zur Auswertung der Bremssignale kann eine geeignete Fehlererkennung verwendet werden. Dazu ist in Figur 1 ein Schaltbild gezeigt, in dem die Bremslichtsignale von der Getriebesteuereinheit (TCU) und der Motorsteuereinheit (PCM) sowie das Fußbremssignal von der Motorsteuereinheit (PCM) gezeigt sind.

In Tabelle 5 sind mögliche Fehler bei der Erkennung gezeigt. Unabhängig davon, ob der Kontakt normalerweise geöffnet oder geschlossen ist, bedeutet der Wert 1, dass die Bremse betätigt ist und der Wert 0, dass die Bremse nicht betätigt ist. Mit "*" ist der Zustand gekennzeichnet, bei dem die Sicherung ausgelöst wird (das gleiche wie bei Fall 1), wenn der Schalter geschlossen ist. "F**" bedeutet, dass ein Kabelbruch erkannt wird, wenn die Spannung an der Klemme PIN52 zwischen 0,5V und 3,5V liegt. Es ist zu beachten, dass bei einem Kabelbruch niemals ein falscher Zustand "1" (Bremse betätigt) erkannt wird.

Aus der Tabelle ergibt sich, dass die einen Kurzschluss betreffenden Fälle nicht direkt erkennbar sind. Ferner betrifft Fall 2 nur den Fall, bei dem StopLightHw =1 und StopLightCAN = 0 sind, wobei ein Diagnose-Fehler-Code (DTC) gesetzt wird. Der Fall 3 wird durch den Spannungslevel an der Klemme PIN 52 erkannt. Der Ersatzwert für StopLightHw ist 0. Ein Diagnose-Fehler-Code (DTC) ist gesetzt.

Der Fall, dass StopLightHw =0 und StopLightCAN = 1 sind, ohne dass Erkennen eines Kabelbruchs (F), wird bei einem Doppelfehler gefunden. Dieser Fall ist jedoch unwahrscheinlich.

Das Softwaresignal Bremslicht (Stoplight) wird durch die ODER-Verknüpfung bei den Signalen StopLightHw und StopLightCAN erhalten. Es ergibt sich:
StopLight = (StopLightHw oder StopLightCAN).

Somit ergibt sich Tabelle 6, in der mögliche Schaltkreisfehler für den Bremsschalter angegeben werden. Dabei ist zu beachten, dass "*" bedeutet, dass, wenn der Schalter geschlossen ist, die Sicherung ausgelöst wird (das gleiche wie bei Fall 1,F in Tabelle 5). Ferner ist zu beachten, dass bei einem Kabelbruch niemals ein falscher Zustand "0" (Bremse nicht betätigt) erkannt wird.

Wenn die Zündung ausgestellt und der Fahrzyklus komplett durchgeführt worden ist, kann für jedes Bremssignal kontrolliert werden, ob es beide Zustände "1" (Bremse betätigt) und "0" (Bremse nicht betätigt) durchlaufen hat. Zu diesem Zweck können bevorzugt drei Bremszustandszähler verwendet werden, welche in Tabelle 7 aufgeführt sind. Die Fehleranzahl steigt bei jedem Fahrzyklus an, bei dem das Bremssignal nicht beide Bremszustände erreicht hat. Wenn der Zähler gleich n ist, wird ein Diagnose-Fehler-Code (DTC) gesetzt. Die Bits für den Bremszustand sind auf "1" gesetzt, wenn der jeweilige Bremszustand während des Fahrzyklus erreicht wird.

Darüber hinaus ist es möglich, eine Fehlererkennung bei Wackelkontakten durchzuführen. Beispielsweise können die Zustandszähler durch einen Zustandsveränderungszähler erweitert werden, welcher in der Lage ist, Wackelkontakte zu erkennen. Dieser Zustandsveränderungszähler steigt durch jede Zustandsänderung bei jedem Bremssignal "0" → "1" or "1" → "0" an. Dies ist in Tabelle 8 gezeigt.

In Tabelle 9 sind Reaktionen auf die verschiedenen Fehler beschrieben. Dabei können bevorzugt vier verschiedene Fehlertypen berücksichtigt werden:
- A: erkannter Fehler während des Fahrzyklus:
Die Fehler 2 und 3 können direkt erkannt werden.
- AC: erkannter CAN-Fehler während des Fahrzyklus:
z. B. CAN ID 360 empfängt keine Signale mehr;
die Signale StopLightCAN und FootBrake fehlen (siehe Can-Fehler);
wenn ID 360 (PCM) nicht sendet, funktioniert auch die Getriebesteuereinheit TCU nicht mehr, da auch das Motormomentsignal fehlt.
- B: Erkannter Fehler nach dem Fahrzyklus:
Auswertung der Bremszustandszählers;
Wenigstens ein Bremssignal sollte beide Zustände (0/1) erreicht haben.
- C: Erkannter Fehler nach dem Fahrzyklus:
Auswertung der Bremszustandszählers;
Kein Bremssignal erreicht beide Zustände (0/1).

Wenn die Fehler A und AC erkannt werden, kann sofort ein Diagnose-Fehler-Code (DTC) gesetzt werden. Die Diagnose-Fehler-Codes für die Fehler B und C werden bevorzugt nach der Auswertung der Bremszustandszähler, nachdem die Zündung ausgeschaltet ist, gesetzt, wenn der Fehlerzähler den Wert n annimmt.

Ferner wird das Messen bzw. das Ermitteln der Fehler beschrieben. Beispielsweise können in Abhängigkeit von der jeweiligen Fehlerart verschiedene Ersatzmessungen durchgeführt werden, welches aus Tabelle 9 ersichtlich ist.

Ferner ist zu beachten, dass mit "*" gekennzeichnet ist, dass anstatt oder zusätzlich zu FixXE andere Messungen möglich sind. Des weiteren kann mit "**"gekennzeichnet sein, dass n bevorzugt Werte im Bereich von etwa 3 bis 5 annehmen kann. Schließlich kann "***" bedeuten, dass der Fehlerzähler Werte annimmt, welche bevorzugt größer als der Wert 0 sind.

In Tabelle 10 werden Risiken beschrieben, welche infolge von nicht erkannten Fehlern auftreten. Tabelle 10 stellt die wesentlichen Risiken dar, wenn das kombinierte Bremslichtsignal oder Fußbremssignal fehlerhaft ist. Der Signalkorrelationsprozeß erkennt Fehler nur nach dem ersten Fahrzyklus mit einem permanent vorliegenden Fehler. Infolgedessen würde ein Fahrzyklus mit einem nicht erkannten Fehler als erster Fahrzyklus durchgeführt werden.

In Tabelle 10 ist mit "*" ein mögliches Einlegen des R-Ganges durch das UND-Signal gekennzeichnet. Mit "**" ist der schlechteste Fall bezeichnet, bei dem das Fahrzeug im 1. Gang ohne Handbremse anfahren kann. Mit jeder Tastpunkt-Adaption beginnt sich das Fahrzeug zu bewegen.

In Tabelle 11 werden die Konsequenzen infolge von Ersatzwerten beschrieben. Die Tabelle zeigt die kritischen Situationen, wenn die Ersatzwerte (FootBrakeAND=0, FootBrakeOR=1) fehlerhaft gesetzt werden.

Ferner werden Ersatzstrategien insbesondere für das Signal FußbremsUND (FootBrakeAND) vorgeschlagen. Dieses Signal kann bevorzugt immer den Wert "0" annehmen. Zunächst wird die Freigabe der Parksperre bei einem fehlerhaften Fall betrachtet. Wenn das FootbrakeAND Signal immer 0 ist, wird die Parksperre niemals freigegeben. Um die Parksperre zu lösen, ohne dass die Fahrzeugsicherheit reduziert wird, sind verschiedene Signalkombinationen für eine Fahrererkennung vorstellbar. Dies ist aus Tabelle 12 ersichtlich:

Im weiteren wird das Einlegen eines Vorwärtsganges oder des Rückwärtsganges bei einem fehlerhaften Fall betrachtet, welche in Tabelle 13 dargestellt ist. Wenn der Wechsel von Neutral (N) zum Fahrmodus (D) oder zum Rückwärtsgang (R) in Abhängigkeit von dem Softwaresignal FootBrakeUND erfolgt, wird eine ähnliche Notlaufstrategie zum Einlegen der Gänge erforderlich.

Tabelle 13 stellt eine Strategie dar, welche bevorzugt beim Stillstand des Fahrzeuges zum Einsatz kommt. Die Strategie kann auch durch das FootBrakeUND Signal erweitert werden.

**Tabelle 1**

| Erzeugung der Bremssignale | | | | | |
|---|---|---|---|---|---|
| Bremslichtschaltersignal PCM | Bremslichtschaltersignal CAN | Bremslicht | Fußbremse | Fußbrems-ODER | Fußbrems-UND |
| 0 | 0 | 0 | 0 | 0 | 0 |
| 0 | 0 | 0 | 1 | 1 | 0 |
| 1 | 0 | 1 | 0 | 1 | 0 |
| 0 | 1 | 1 | 0 | 1 | 0 |
| 1 | 1 | 1 | 0 | 1 | 0 |
| 0 | 1 | 1 | 1 | 1 | 1 |
| 1 | 0 | 1 | 1 | 1 | 1 |
| 1 | 1 | 1 | 1 | 1 | 1 |

**Tabelle 2**

| Empfangene Signale | Beschreibung |
|---|---|
| Bremslichtschaltersignal PCM StopLightHw | Bremslichtschaltersignal an PIN 52 |
| Bremslichtschaltersignal CAN StopLightCAN | Bremslichtschaltersignal von PCM an CAN ID 360, Byte 6, Bit 3 |
| Fußbremsschaltersignal FootBrake | Fußbremsschaltersignal von PCM an CAN ID 360, Byte 6, Bit 4 |

**Tabelle 3**

| ODER-Signal Ersatzwert = 1 | |
|---|---|
| Situation | Bemerkung |
| Schalten des Rückwärtsgangs | Der Rückwärtsgang kann nur bei gedrückter Bremse geschaltet werden. |
| Starterfreigabe | Starterfreigabe nur mit Bremse. |
| Rückschalt-Verhinderung | Erkennung von blockierenden Rädem ist verbunden mit der Bremse. |
| Bergerkennung | Keine Berechnung von a_{diff} |
| Segeffunktion | Bremse ist eingebunden in Anfangs- und Endbedingungen der Segelfunktion. |

**Tabelle 4**

| UND-Signal Ersatzwert = 0 | |
|---|---|
| Situation | Bemerkung |
| Kriechen | Bei fehlerhafter Bremse, kriecht das Fahrzeug gegen die Bremse (Fahrerwamung). |
| TP Adaption | Keine Tastpunkt-Adaption (TP-Adaption), wenn Bremsssignal außer Kraft ist. |
| Parksperre | Keine Parksperr-Deaktivierung bei unsicherem Bremssignal. |
| EOL Getriebe | Lernen der Getriebegeometrie, nur wenn Bremse gedrückt ist. |
| EOL TP | Lernen des TP, nur wenn Bremse gedrückt ist. |
| Türöffnungswamung | Keine Warnung, wenn Bremse gedrückt ist. |
| Notfahrt nach Hause | Kupplungsaktivierung während Notfahrt in Abhängigkeit des Bremsenstatus. |
| Sicherheitsfahrbedingung | Bedingung zur Rückkehr zur Normalfunktion (→Fehlermanagement). |
| ABS Signal | Plausibilitätscheck benötigt Bremssignal. |
| Schaltplanung | Wenn die Bremse gedrückt ist, ist das Beschleunigungssignal "-10". |
| Plausibilitätscheck von Radgeschwindigkeitssignalen | Der Check von durchdrehenden, blockierenden oder fehlerhaften Radgeschwindigkeiten ist mit dem Bremssignal gekoppelt. |

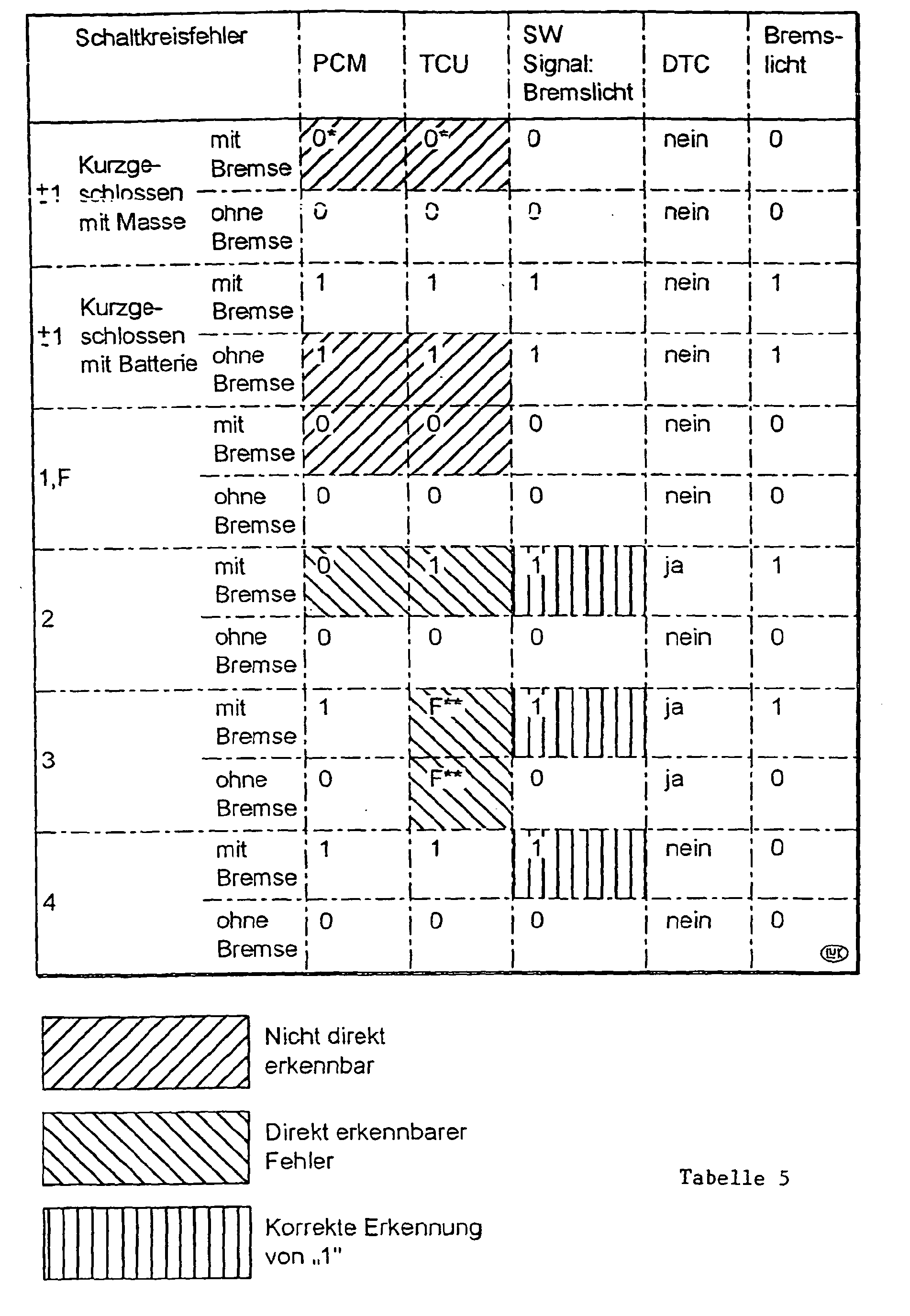

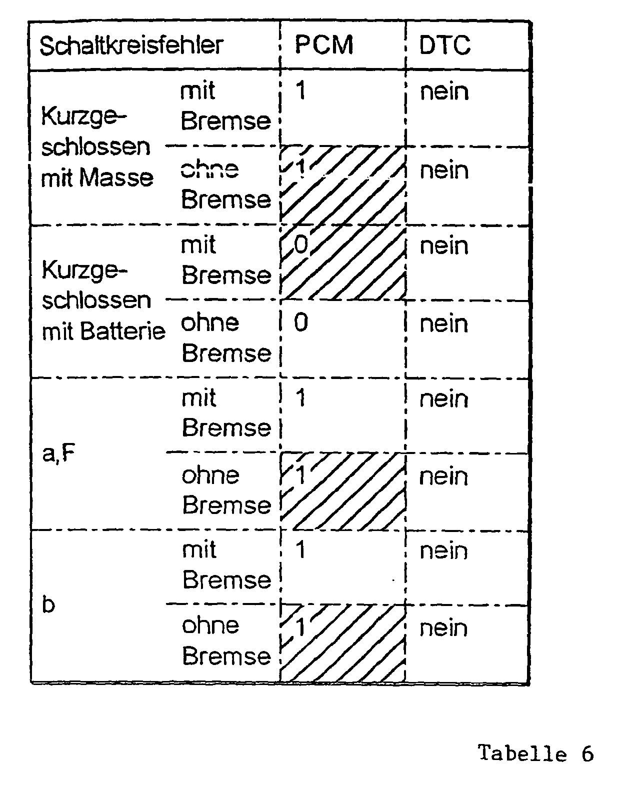

**Tabelle 7**

| Name des Bremszustandszähler | Fehlerzähler | Bremszustand | |
|---|---|---|---|
| | | 0 | 1 |
| Fußbremse FootBrake_SC | 0..n | 0/1 | 0/1 |
| Bremslicht StopLightCAN_SCr | 0..n | 0/1 | 0/1 |
| Bremslicht StopLightHw_SC | 0..n | 0/1 | 0/1 |

**Tabelle 8**

| Name des Bremszustandszähler | Zustandsveränderungszähler | Fehlerzähler | Bremszustand | |
|---|---|---|---|---|
| | | | 0 | 1 |
| Footbrake_SC | x | 0..n | 0/1 | 0/1 |
| StopLightCAN_SC | x | 0..n | 0/1 | 0/1 |
| StopLightHw_SC | x | 0..n | 0/1 | 0/1 |

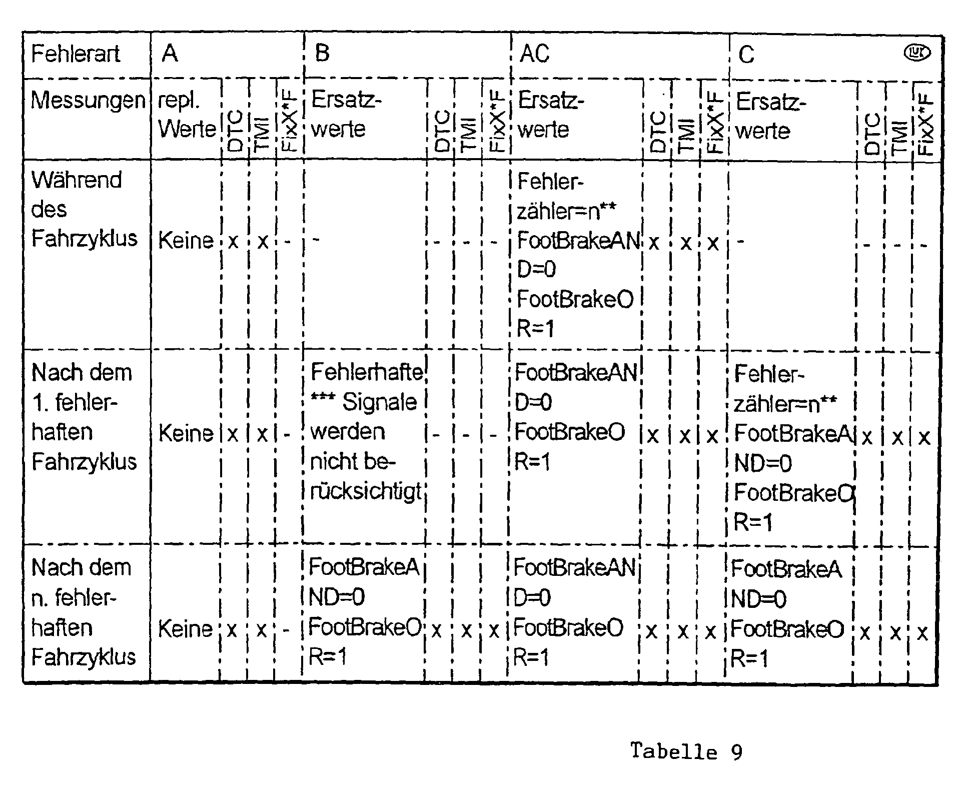

**Tabelle 10**

| Hauptrisiken von unerkannten Fehlern, d.h. während des ersten (zweiten) Fahrzyklus | | | |
|---|---|---|---|
| Einfachfehler | | Doppelfehler | |
| 1Signal permanent 0 (FootBrakeUND immer 0) | 1Signal permanent 1 (FootBrakeODER immer 1) | beide Signale permanent 0 (FootBrakeUND/ ODER immer 0) | beide Signale permanent 1** (FootBrakeUND/ ODER immer 1) |
| - Vehicle kriecht gegen Bremse | - Rückwärtsgang kann eingelegt werden ohne Drücken der Bremse* | - Kein Einlegen des Rückwärtsgangs | - Parksperre wird ohne Drücken der Bremse gelöst |
| - keine Tastpunkt Adaptation | | - Vehicle kriecht gegen Bremse | - (kein Kriechen**) |
| - keineDeaktivierung der Parksperre | | - keine Tastpunkt- Adaptation | - Tastpunkt-Adaptation ohne Bremse** |
| | | - keine Deaktivierung der Parksperre | - Rückwärtsgang kann eingelegt werden ohne Drücken der Bremse |

**Tabelle 11**

| Schwerwiegende Konsequenzen infolge von Ersatzwerten |
|---|
| FootBrakeUND=0, FootBrakeODER=1 |
| - Vehicle kriecht gegen die Bremse |
| - Keine Tastpunkt-Adaptation |
| - Rückwärtsgang kann eingelegt werden ohne Drücken der Bremse |
| - Keine Freigabe der Parksperre |

**Tabelle 12**

| | | | | |
|---|---|---|---|---|
| FootBrakeODER | UND | Handbremse wechselt von "0"→"1" | UND | Max. 3s nach Zündung an |
| | | OR | | |
| | | Gang wechselt von "D"/"R"→"N" | | |
| | | OR | | |
| | | Pedal > 50% | | |

**Tabelle 13**

| | | | | |
|---|---|---|---|---|
| FootBrakeODER | UND | Handbremse wechselt von "0"→"1" | UND | Max. 3s nach Motorstart |
| | | ODER | | |
| | | Gang wechselt von "N"→"D"/"R" | | |
| | | ODER | | |
| | | Pedal > 50% | | |
| Pedal > 50% | UND | Gang wechselt von "N"→"D"/"R" | UND | in 3s |
| "N"→"D"→"R" | UND | in 200 ms | | |
| ODER | | | | |
| "R"→"D"→"D" | | | | |

## Patentansprüche

1. Verfahren zum Überprüfen von Bremssignalen bei einem Fahrzeug mit einer Getriebesteuereinheit und einer Motorsteuereinheit, **dadurch gekennzeichnet, dass** eine Fehlererkennung und/oder eine Plausibilisierung eines Fußbremslichtschaltersignals und eines Bremslichtschaltersignals von einem Fahrzeugnetzwerk und eines Bremslichtschaltersignals von der Motorsteuereinheit, welche von der Getriebesteuereinheit empfangen werden, durchgeführt wird.

2. Verfahren nach Anspruch 1, **dadurch gekennzeichnet, dass** die Bremssignale gegeneinander validiert werden, wobei zumindest ein logisches Verknüpfungssignal verwendet wird.

3. Verfahren nach Anspruch 2, **dadurch gekennzeichnet, dass** als logisches Verknüpfungssignal zumindest eine UND-Verknüpfung und eine ODER-Verknüpfung verwendet wird, welche die Bremssignale miteinander verknüpfen.

4. Verfahren nach einem der vorangehenden Ansprüche, **dadurch gekennzeichnet, dass** die Bremssignale zur Fehlererkennung während und/oder nach einem vorbestimmten Fahrzyklus beobachtet bzw. ausgewertet werden.

5. Verfahren nach Anspruch 4, **dadurch gekennzeichnet, dass** sich die Länge eines Fahrzyklus **dadurch** bestimmt, dass beobachtet wird, ob ein Gang eingelegt ist, welcher größer als der zweite Gang ist, und/oder die Fahrzeuggeschwindigkeit größer als 16 km/h ist und/oder die Zündung zumindest für 2 Minuten angeschaltet ist.

6. Verfahren nach Anspruch 4 oder 5, **dadurch gekennzeichnet, dass** nach beendetem Fahrzyklus bei jedem Bremssignal überprüft wird, ob es den Zustand "1" (Bremse betätigt) und Zustand "0" (Bremse nicht betätigt) durchlaufen hat.

7. Verfahren nach Anspruch 6, **dadurch gekennzeichnet, dass** bei der Überprüfung der Bremssignale zumindest ein Bremszustandszähler verwendet wird.

8. Verfahren nach Anspruch 7, **dadurch gekennzeichnet, dass** die Fehieranzahi bei jedem Bremszustandszähler erhöht wird, wenn während eines Fahrzyklus das Bremssignal nicht beide Bremszustände erreicht.

9. Verfahren nach Anspruch 8, **dadurch gekennzeichnet, dass**, wenn der Bremszustandszähler den Wert n annimmt, ein Diagnose-Fehler-Code (DTC) von der Getriebesteuereinheit gesetzt wird.

10. Verfahren nach einem der Ansprüche 7 bis 9, **dadurch gekennzeichnet, dass** der Bremszustandszähler zur Fehlererkennung eines Wackelkontaktes um zumindest einen Zustandsveränderungszähler erweitert wird.

11. Verfahren nach einem der vorangehenden Ansprüche, **dadurch gekennzeichnet, dass** verschiedene Fehlertypen berücksichtigt werden.

12. Verfahren nach Anspruch 11, **dadurch gekennzeichnet, dass** der Fehlertyp (A) während eines Fahrzyklus erkannt wird.

13. Verfahren nach Anspruch 11 oder 12, **dadurch gekennzeichnet, dass** der Fehlertyp (AC) ein CAN-Fehler bei dem Fahrzeugnetzwerk während eines Fahrzyklus ist.

14. Verfahren nach einem der Ansprüche 11 bis 13, **dadurch gekennzeichnet, dass** der Fehlertyp (B) ein Fehler nach beendetem Fahrzyklus ist, bei dem der Bremszustandszähler ausgewertet wird und wenigstens ein Bremssignal beide Bremszustände 0 und 1 erreicht hat.

15. Verfahren nach einem der Ansprüche 11 bis 14, **dadurch gekennzeichnet, dass** der Fehlertyp (C) ein Fehler nach beendetem Fahrzyklus ist, bei dem der Bremszustandszähler ausgewertet wird und kein Bremssignal beide Bremszustände 0 und 1 erreicht hat.

16. Verfahren nach einem der Ansprüche 11 bis 15, **dadurch gekennzeichnet, dass**, wenn die Fehlertypen (A) und (AC) erkannt werden, sofort ein Diagnose-Fehler-Code (DTC) gesetzt wird.

17. Verfahren nach einem der Ansprüche 11 bis 16, **dadurch gekennzeichnet, dass**, wenn die Fehlertypen (B) und (C) erkannt werden, ein Diagnose-Fehler-Code (DTC) erst nach der Auswertung der Bremszustandszähler gesetzt wird, nachdem die Zündung ausgeschaltet ist, wenn der Fehlerzähler den Wert n annimmt.

18. Verfahren nach einem der Ansprüche 11 bis 17, **dadurch gekennzeichnet, dass** in Abhängigkeit von dem jeweiligen Fehlertyp verschiedene Ersatzwerte verwendet werden.

19. Verfahren nach Anspruch 18, **dadurch gekennzeichnet, dass**, wenn sämtliche Bremssignale nach der Beendigung des Fahrzyklus nur einen Zustand angenommen haben, sofort die Ersatzwerte für die Ausgangssignale entsprechend gesetzt werden.

20. Verfahren nach Anspruch 19, **dadurch gekennzeichnet, dass** die durch die Fehler hervorgerufenen Fehlerreaktionen nur nach Beendigung eines korrekten Fahrzyklus zurückgenommen werden.

21. Verfahren nach einem der Ansprüche 16 oder 17, **dadurch gekennzeichnet, dass** der Diagnose-Fehler-Code (DTC) bei direkt erkannten Fehlertypen (A) und (AC) zurückgenommen wird, wenn die Bremssignale wieder korrekt empfangen werden.

22. Verfahren nach einem der Ansprüche 16 oder 17, **dadurch gekennzeichnet, dass** bei indirekt erkannten Fehlertypen das entsprechende Bremssignal nicht zu Beginn des nächsten Fahrzyklus berücksichtigt wird, wenn der Fehlerzähler des Bremszustandszählers nicht den Wert 0 annimmt.

23. Verfahren nach einem der Ansprüche 16 oder 17, **dadurch gekennzeichnet, dass** das Zurücksetzen des Bremszustandszählers auf den Wert 0 für die Fehlertypen (B) und (C) unterschiedlich ist, wobei, wenn der Bremszustandszähler den Wert 0 annimmt, das Signal validiert und für die Bremszustandsbewertung wieder berücksichtigt wird.

24. Verfahren nach Anspruch 23, **dadurch gekennzeichnet, dass** der Bremszustandszählers auf den Wert 0 zurückgesetzt wird, wenn bei dem Fehlertyp (B) während des Fahrzyklus beide Zustände 1 und 0 bei der Bremse durchlaufen worden sind.

25. Verfahren nach Anspruch 23 oder 24, **dadurch gekennzeichnet, dass** bei dem Fehlertyp (C) der Bremszustandszähler, nachdem die Zündung ausgeschaltet ist, auf den Wert 0 zurückgesetzt wird, wenn während des Fahrzyklus beide Zustände 1 und 0 bei der Bremse durchlaufen worden sind.

26. Vorrichtung zum Überprüfen von Bremssignalen bei einem Fahrzeug mit einer Getriebesteuereinheit und einer Motorsteuereinheit, insbesondere zum Durchführen des Verfahrens nach einem der Ansprüche 1 bis 25, **dadurch gekennzeichnet, dass** durch die Getriebesteuereinheit eine Fehlererkennung und/oder eine Plausibilisierung der unterschiedlichen Bremssignale vorgesehen ist.

## Claims

1. A method of checking brake signals in a vehicle with a transmission control unit and an engine control unit, **characterized in that** an error detection and/or a plausibility check of a foot brake light switch signal and of a brake light switch signal from a vehicle network and of a brake light switch signal from the engine control unit, which are received by the transmission control unit, is performed.

2. A method according to Claim 1, **characterized in that** the brake signals are validated opposite one another, using at least one logical linkage signal.

3. A method according to Claim 2, **characterized in that** at least one AND link and one OR link which link the brake signals together are used as the logical linkage signal.

4. A method according to one of the preceding claims, **characterized in that** the brake signals are observed and evaluated during and/or after a predetermined driving cycle to detect errors.

5. A method according to Claim 4, **characterized in that** the length of a driving cycle is determined by observing whether a gear is selected which is higher than the second gear, and/or whether the vehicle speed is greater than 16 km/h, and/or whether the ignition has been switched on for at least 2 minutes.

6. A method according to Claim 4 or 5, **characterized in that** after the driving cycle has ended each brake signal is checked to determine whether it has passed through the state "1" (brake activated) and state "0" (brake not activated).

7. A method according to Claim 6, **characterized in that** at least one brake state counter is used when checking the brake signals.

8. A method according to Claim 7, **characterized in that** the error count is incremented in each brake state counter if the brake signal does not attain both brake states during a driving cycle.

9. A method according to Claim 8, **characterized in that** if the brake state counter assumes the value n, a diagnostic trouble code (DTC) is set by the transmission control unit.

10. A method according to one of Claims 7 through 9, **characterized in that** the brake state counter is augmented by at least one state change counter for detecting a loose contact.

11. A method according to one of the preceding claims, **characterized in that** various types of errors are taken into account.

12. A method according to Claim 11, **characterized in that** the error type (A) is detected during a driving cycle.

13. A method according to Claim 11 or 12, **characterized in that** the error type (AC) is a CAN error in a vehicle network during a driving cycle.

14. A method according to one of Claims 11 to 13, **characterized in that** the error type (B) is an error after the driving cycle has ended, where the brake state counter is evaluated and at least one brake signal has attained both brake states 0 and 1.

15. A method according to one of Claims 11 to 14, **characterized in that** the error type (C) is an error after the driving cycle has ended, where the brake state counter is evaluated and no brake signal has attained both brake states 0 and 1.

16. A method according to one of Claims 11 to 15, **characterized in that** if the error types (A) and (AC) are detected, a diagnostic trouble code (DTC) is set immediately.

17. A method according to one of Claims 11 to 16, **characterized in that** if the error types (B) and (C) are detected, a diagnostic trouble code (DTC) is not set until after the evaluation of the brake state counter, after the ignition is switched off, if the error counter assumes the value n.

18. A method according to one of Claims 11 to 17, **characterized in that** various replacement values are used, depending on the particular error type.

19. A method according to Claim 18, **characterized in that** if all the brake signals have assumed only one state after the driving cycle has ended, the replacement values for the output signals are immediately set accordingly.

20. A method according to Claim 19, **characterized in that** the error responses evoked by the error are cancelled only after a correct driving cycle is completed.

21. A method according to one of Claims 16 or 17, **characterized in that** the diagnostic trouble code (DTC) is cancelled again in the case of directly detected error types (A) and (AC) if the brake signals are again received correctly.

22. A method according to one of Claims 16 or 17, **characterized in that** in the case of indirectly detected error types the corresponding brake signal is ignored at the beginning of the next driving cycle if the error counter of the brake state counter does not assume the value 0.

23. A method according to one of Claims 16 or 17, **characterized in that** the resetting of the brake state counter to the value 0 for the error types (B) and (C) differs, where if the brake state counter assumes the value 0 the signal is validated and is taken into account again when evaluating the brake state.

24. A method according to Claim 23, **characterized in that** in the case of error type (B) the brake state counter is reset to the value 0, if both brake states 1 and 0 have been passed through during the driving cycle.

25. A method according to Claim 23 or 24, **characterized in that** in the case of error type (B) the brake state counter is reset to the value 0 after the ignition is switched off, if both brake states 1 and 0 have been passed through during the driving cycle.

26. A device for checking brake signals in a vehicle having a transmission control unit and an engine control unit, in particular for carrying out the method according to one of Claims 1 to 25, **characterized in that** an error detection and/or a plausibility check of the different brakes is provided.

## Revendications

1. Procédé de contrôle de signaux de freinage sur un véhicule muni d'une unité de gestion de boîte de vitesses et d'une unité de gestion du moteur **caractérisé par le fait que** sont effectués une détection d'erreur et/ou un contrôle de cohérence d'un signal d'interrupteur du feu de freinage à pédale et d'un signal d'interrupteur d'un feu de freinage du réseau d'un véhicule et un signal d'interrupteur d'un feu de freinage en provenance de l'unité de gestion du moteur réceptionnés par l'unité de gestion de la boîte de vitesses.

2. Procédé selon la revendication 1, **caractérisé par le fait que** les signaux de freinage sont validés mutuellement et qu'au moins un signal d'opérateur logique est utilisé.

3. Procédé selon la revendication 2, **caractérisé par le fait que** sont utilisés en tant que signaux d'opérateur logique au moins un opérateur logique ET et un opérateur logique OU qui relient les signaux de freinage entre eux.

4. Procédé selon l'une quelconque des revendications précédentes, **caractérisé par le fait que** les signaux de freinage sont observés ou analysés pendant et/ou après un cycle de conduite prédéfini en vue d'une détection d'erreur.

5. Procédé selon la revendication 4, **caractérisé par le fait que** la durée d'un cycle de conduite est définie par détection qu'une vitesse supérieure à la seconde est enclenchée et/ou que la vitesse du véhicule est supérieure à 16 km/h et/ou que l'allumage est mis en marche depuis au moins 2 minutes.

6. Procédé selon la revendication 4 ou 5, **caractérisé par le fait qu'**après chaque cycle de conduite achevé et pour chaque signal de freinage, il est vérifié si celui-ci est passé par l'état « 1 » (frein actionné) et par l'état « 0 » (frein non actionné).

7. Procédé selon la revendication 6, **caractérisé par le fait qu'**au moins un compteur d'états de freinage est utilisé lors du contrôle des signaux de freinage.

8. Procédé selon la revendication 7, **caractérisé par le fait que** le nombre d'erreurs est incrémenté pour chaque compteur d'états de freinage si, lors du cycle de conduite, le signal de freinage ne passe pas par les deux états.

9. Procédé selon la revendication 8, **caractérisé par le fait que**, lorsque le compteur d'états de freinage affiche la valeur n, un code d'erreur de diagnostic est généré par l'unité de gestion de la boîte de vitesses.

10. Procédé selon l'une quelconque des revendications 7 à 9, **caractérisé par le fait qu'**au compteur d'états de freinage est adjoint au moins un compteur de changement d'état pour la détection d'erreur d'un contact intermittent.

11. Procédé selon l'une quelconque des revendications précédentes, **caractérisé par le fait que** plusieurs types d'erreurs sont pris en compte.

12. Procédé selon la revendication 11, **caractérisé par le fait que** le type d'erreur (A) est détecté pendant un cycle de conduite.

13. Procédé selon la revendication 11 ou 12, **caractérisé par le fait que** le type d'erreur (AC) est une erreur CAN dans le réseau d'un véhicule pendant un cycle de conduite.

14. Procédé selon l'une quelconque des revendications 11 à 13, **caractérisé par le fait que** l'erreur de type (B) est une erreur qui survient après un cycle de conduite achevé et lors duquel le compteur d'états de freinage est analysé et qu'au moins un signal de freinage est passé par les deux états de freinage 0 et 1.

15. Procédé selon l'une quelconque des revendications 11 à 14, **caractérisé par le fait que** l'erreur de type (C) est une erreur qui survient après un cycle de conduite achevé lors duquel le compteur d'états de freinage est analysé et qu'aucun signal de freinage n'est passé par les deux états 0 et 1.

16. Procédé selon l'une quelconque des revendications 11 à 15, **caractérisé par le fait que**, lorsque des erreurs de type (A) et (AC) sont détectées, un code d'erreur de diagnostic est immédiatement généré.

17. Procédé selon l'une quelconque des revendications 11 à 16, **caractérisé par le fait que**, lorsque des erreurs de type (B) et (C) sont détectées, un code d'erreur de diagnostic n'est généré qu'après l'analyse du compteur d'états de freinage et après que l'allumage a été arrêté et lorsque le compteur d'erreurs affiche la valeur n.

18. Procédé selon l'une quelconque des revendications 11 à 16, **caractérisé par le fait qu'**en fonction du type d'erreur, différentes valeurs de remplacement sont utilisées.

19. Procédé selon la revendication 18, **caractérisé par le fait que**, lorsque tous les signaux de freinage ne sont passés que par un seul état une fois le cycle de conduite achevé, les valeurs de remplacement pour les signaux de sortie sont immédiatement générées en conséquence.

20. Procédé selon la revendication 19, **caractérisé par le fait que** les réactions erronées provoquées par les erreurs ne sont annulées qu'après l'achèvement d'un cycle de conduite correct.

21. Procédé selon l'une des revendications 16 ou 17, **caractérisé par le fait que** le code d'erreur de diagnostic pour les types d'erreur (A) et (AC) à détection directe est annulé lorsque les signaux de freinage sont reçus de nouveau correctement.

22. Procédé selon l'une des revendications 16 ou 17, **caractérisé par le fait qu'**en cas de types d'erreur détectés indirectement, le signal de freinage correspondant n'est pas pris en compte au début du cycle de conduite suivant lorsque le compteur d'erreurs du compteur d'états de freinage n'affiche pas la valeur 0.

23. Procédé selon l'une des revendications 16 ou 17, **caractérisé par le fait que** la remise à zéro du compteur d'états de freinage est différente pour les erreurs de type (B) et (C) et, dans ce cas, lorsque le compteur d'états de freinage affiche la valeur 0, le signal est validé et de nouveau pris en compte pour l'analyse de l'état de freinage.

24. Procédé selon la revendication 23, **caractérisé par le fait que** le compteur d'états de freinage est remis à zéro lorsqu'en cas d'erreur de type (B), les deux états 1 et 0 de freinage ont été atteints pendant le cycle de conduite.

25. Procédé selon l'une des revendications 23 ou 24, **caractérisé par le fait qu'**en cas d'erreur de type (C) ,le compteur d'états de freinage est remis à zéro après l'arrêt de l'allumage lorsque, pendant le cycle de conduite, les deux états de freinage 1 et 0 ont été atteints.

26. Dispositif de contrôle de signaux de freinage sur un véhicule muni d'une unité de gestion de boîte de vitesses et d'une unité de gestion du moteur, en particulier pour l'exécution du procédé selon l'une quelconque des revendications 1 à 25, **caractérisé par le fait qu'**une détection d'erreur et/ou un contrôle de cohérence des différents signaux de freinage sont prévus par l'intermédiaire d'une unité de gestion de boîte de vitesses.
